# EUROPÄISCHE PATENTSCHRIFT

(11) **EP 3 000 601 B1**
(45) Veröffentlichungstag und Bekanntmachung des Hinweises auf die Patenterteilung: **21.02.2018**
(21) Anmeldenummer: 15002744.9
(22) Anmeldetag: 23.09.2015
(51) Int. Cl.: B32B 38/06, B29C 67/00, B32B 38/18, B32B 15/08, B23P 15/26

(54) **VERFAHREN ZUR HERSTELLUNG EINES MEHRSCHICHTIGEN DREIDIMENSIONAL GEFORMTEN BAUTEILS UND SOLCHES BAUTEIL**
METHOD FOR MAKING A MULTILAYER THREE-DIMENSIONALLY FORMED PART AND SUCH DEVICE
PROCEDE DE FABRICATION D'UN COMPOSANT MULTICOUCHES TRIDIMENSIONNEL ET UN TEL COMPOSANT

(30) Priorität: 23.09.2014 DE 102014014083
(43) Veröffentlichungstag der Anmeldung: 30.03.2016
(73) Patentinhaber: Fraunhofer-Gesellschaft zur Förderung der angewandten Forschung e.V., 80686 München (DE)
(72) Erfinder: Werner, Markus, 09127 Chemnitz (DE)
(74) Vertreter: Grünecker Patent- und Rechtsanwälte PartG mbB

(56) Entgegenhaltungen:
- EP-A1- 1 989 959
- DE-A1- 1 935 933
- DE-A1-102006 024 263
- GB-A- 1 590 636

## Beschreibung

Die Erfindung betrifft ein Verfahren zur Herstellung eines mehrschichtigen dreidimensional geformten Bauteils. Insbesondere kann ein solches Bauteil als Leichtbauteil in allen Bereichen, in denen es darum geht, Gewicht bei gleichzeitig höchster Belastung einzusparen, oder als dreidimensionaler Wärmetauscher in Formen zur homogenen Temperierung Verwendung finden.

Ein Kunststoffformteil mit einer dekorativen thermoplastischen Schicht sowie ein Verfahren zu dessen Herstellung wird in der DE 10 2006 024 263 A1 beschrieben. Die Muldeseite des zur Formung des Kunststoffformteiles verwendeten Werkzeuges weist eine Struktur auf, sodass während der Formung des Kunststoffformteiles die Struktur auf die Oberfläche der thermoplastischen Folie übertragen und in diese eingeprägt wird. Struktur der Muldeseite des Werkzeuges auf der Oberfläche der thermoplastischen Folie. Unter dem Begriff "eingeprägte Struktur" auf der Oberfläche des Kunststoffformteils ist eine regelmäßige oder unregelmäßig nicht-glatte Oberfläche, wie etwa ein Körnungsmuster, ein Rillenmuster, ein Dellenmuster, ein Lederprägungsmuster, ein Logomuster aus Buchstaben, Ziffern oder geometrischen Figuren, eine dekorative Prägung usw., zu verstehen.

Mehrschichtige dreidimensional geformte Bauteile kommen als Verbundbauteile (insbesondere als Kunststoff-Metall-Verbundbauteile) im Leichtbau, insbesondere im Strukturleichtbau zum Einsatz und weisen in einer Zwischenschicht (zwischen den Außenflächen des Verbundes) eine die Steifigkeit des Bauteils erhöhende Struktur (z. B. in Form zusätzlicher Verprägungen, Rippen und / oder Sicken) auf. Durch eine derartige Struktur kann ohne zusätzlichen Materialaufwand eine Versteifung des Bauteils, insbesondere bei größeren, zum Verwölben neigenden Flächen, sichergestellt werden, wobei zu diesem Zweck auf dem Markt verschiedene wölbstrukturierte Bleche oder mehrschichtige Leichtbauplatten, in denen solche wölbstrukturierten Bleche bereits eingebunden sind, erhältlich sind. Problematisch ist allerdings die Umformung der vorgenannten Halbzeuge zu dreidimensional geformten Bauteilen, da durch diese dreidimensionale Umformung die Wölbstrukturen zumindest lokal verstört werden, sodass auch die durch diese Wölbstrukturen erzielte steifigkeitserhöhende Wirkung zumindest lokal verloren geht.

Bei Formen zur homogenen Temperierung (insbesondere zur homogenen Temperierung großer Flächen) besteht die Herausforderung darin, den Wärmeträger zum einen nahe an die Kontaktfläche zu bringen und zum anderen die notwendige Formstabilität zu gewährleisten, um auftretende Prozesslasten versagensfrei zu ertragen. Da bei der Nutzung massiver Formen und Werkzeuge aufgrund der damit verbundenen hohen thermisch trägen Masse ein hoher Energieverbrauch und lange Zykluszeiten für die Temperierung auftreten, werden für Kühltanks und flächige Wärmetauscher häufig sogenannte "Pillow Plates" eingesetzt. Diese aus zwei Blechen bestehenden, ein- oder beidseitig profilierten "Pillow Plates" eignen sich jedoch nicht zur Herstellung dreidimensional geformter Bauteile und weisen zudem in ihren Eckbereichen eine nachteilige Strömungsführung mit sogenannten "Totwassergebieten" auf, die zu einer ungleichmäßigen Temperierung führt.

Zur Herstellung von Leichtbauteilen stehen verschiedenartige flächige Halbzeuge (z. B. in Form von wölbstrukturierten Blechen oder in Form von Leichtbauplatten und -sandwiches) bereits heute als preiswerte Massenprodukte in unterschiedlichsten Abmessungen zur Verfügung. Diesen Halbzeugen gemein ist das Vorhandensein gleichmäßig verteilter steifigkeitssteigender Strukturen (Noppen, Verprägungen oder ähnliche Elemente). Durch die Anwendung von Umformverfahren mit formspeichernden Werkzeugen (z. B. Presswerkzeugen) können diese Halbzeuge zwar einfach in eine gewünschte dreidimensionale Bauteilform gebracht werden. Allerdings geht mit der dreidimensionalen Umformung auch eine Deformation und somit eine (zumindest lokale) Beschädigung der steifigkeitssteigernden Strukturen einher, was die Einsetzbarkeit der nach vorgenanntem Verfahren hergestellten dreidimensionalen Bauteile einschränkt. Zudem werden die steifigkeitssteigernden Strukturen in den bekannten Halbzeugen zumeist selbst durch formspeichernde Werkzeuge (wie z. B. durch noppenförmige Prägewalzen) hergestellt, weshalb diese Strukturen nachteilhafterweise ohne jegliche lokale Anpassung als regelmäßige Einheitselemente gleicher Größe gestaltet sind.

Daneben ist es auch bekannt, Leichtbauteile durch freie Innenhochdruckumformung (FIDU) herzustellen, indem ebene Bleche zunächst lokal gefügt und in die so erzeugten Hohlräume ein (gasförmiges oder flüssiges) Druckmedium eingeleitet wird. Durch den hohen Innendruck wird die Fließgrenze des eingesetzten Blechwerkstoffes überschritten, sodass eine plastische Formänderung stattfindet. Mittels der FIDU-Technologie wird somit aus zweidimensionalen Blechen ein dreidimensionales Bauteil hergestellt, das insbesondere im Leichtbau eingesetzt werden kann, wobei die sich einstellende Endgeometrie des Bauteils durch die Geometrie der Verbindungsstellen zwischen den Einzelblechen und durch innenliegende Begrenzungselemente gesteuert werden kann. Da bei der freien Innenhochdruckumformung ein im Ausgangszustand ebener Schichtverbund (aus mehreren flachen Einzelblechen) von innen heraus "aufgeblasen" wird, sind die 3D-Gesaltungsfreiheit stark eingeschränkt und somit nur relativ flache Bauteilgeometrien durch das FIDU-Verfahren realisierbar.

Die vorgenannten, bei der dreidimensionalen Umformung auftretenden Probleme bestehen auch bei den in Formen zur homogenen Temperierung (Kühlung, Aufheizung, Wechseltemperierung) lokal miteinander verbundenen "Pillow Plates" (Wärmetauscherplatten), welche zwischen sich ein dem Durchfluss eines Wärmeträgermediums dienendes Kanalsystem bilden. Das Problem hierbei ist die hohe Steifigkeit solcher "Pillow Plates" gegenüber der dreidimensionalen Umformung mit der nachteilhaften Folge, dass sich nur einfache Formen (z. B. zylinderförmige Tanks), aber keine komplexeren dreidimensionalen Bauteile (z. B. mit doppelt gekrümmten Flächen) aus solchen "Pillow Plates" herstellen lassen.

Eine weitere Problemstellung ergibt sich daraus, dass die zur Temperierung großer Flächen verwendeten Werkzeuge oder Formen meist sehr massereich sind und damit eine sehr große und sehr träge thermische Masse aufweisen. Dies ist insbesondere bei Wechseltemperierung energetisch nachteilig und führt zu langen, unproduktiven Heiz- und Kühlzeiten, zu deren Beseitigung Werkzeuge und Formen gefordert sind, die eine gute Wärmeleitfähigkeit aufweisen, um schnellstens eine definierte homogene Temperierung zu ermöglichen.

Alternativ ist eine Beheizung durch Heizmatten und/oder -geflechte bekannt, wobei diese flächenförmigen Heizelemente ebenfalls nicht in alle gewünschten dreidimensionalen Formen überführt werden können bzw. nur indem eine weitreichende "Zerstückelung" der besagten Heizelemente vorgesehen wird, was nachteilhafterweise eine Vielzahl von Anschlüssen und Regelkreisen zur Folge hat.

Eine weitere alternative Möglichkeit, homogen temperierte Formen herzustellen, besteht darin, zunächst die dünnwandige Form (z. B. Schale) herzustellen und nachträglich auf der dem Werkstück abgewandten Rückseite der Form Rohrleitungen zum Durchfluss des Temperierungsmediums anzubringen, wobei jedoch das Anbringen der erforderlichen Rohrleitungen bei dreidimensionalen Formen einen enormen zusätzlichen Installationsaufwand verlangt.

*Die Aufgabe der Erfindung ist* es, *unter Vermeidung der vorgenannten Nachteile ein Verfahren zur Herstellung eines mehrschichtigen dreidimensional geformten Bauteils anzugeben, bei dem die Ausbildung einer steifigkeitssteigernden und*/*oder ein Kanalsystem für ein Temperierungsmedium bildenden Struktur nicht zu Lasten der dreidimensionalen Gestaltungsfreiheit des Bauteils geht.*

*Die technische Lösung dieser Aufgabe erfolgt durch die Merkmale des Anspruchs 1.*

*Das erfindungsgemäße Verfahren zur Herstellung eines mehrschichtigen dreidimensional geformten Bauteils ist gekennzeichnet durch die folgende Abfolge von zeitlich aufeinanderfolgenden Verfahrensschritten:*
a) Bereitstellen von mindestens zwei flächigen Elementen;
b) Verbinden der Elemente zur Bildung eines aus mehreren Schichten zusammengesetzten Verbundes;
c) Umformen des Verbundes in eine gewünschte dreidimensionale Form;
d) Lokales Verformen mindestens einer der Schichten unter Ausbildung einer steifigkeitssteigernden und / oder ein Kanalsystem bildenden Struktur.

Der Kern der vorliegenden Erfindung besteht darin, dass die bisher bei der Herstellung mehrschichtiger dreidimensional geformter Bauteile verwendete Abfolge von Fertigungsschritten umgekehrt wird. Anstatt wie im Stand der Technik üblich zunächst Leichtbauplatten bzw. Wärmetauscherplatten ("Pillow Plates") mit einer integrierten Struktur zur Versteifung bzw. zur Führung des Temperierungsmediums herzustellen und anschließend diese zweidimensionalen Ausgangsprodukte einer dreidimensionalen Umformung zu unterziehen, um so ein dreidimensionales Bauteil für Leichtbau- oder Temperierungsanwendungen zu erhalten, wird erfindungsgemäß zunächst ein mehrschichtiger flächiger Verbund (ohne Versteifungs- bzw. Kanalstruktur) in eine gewünschte dreidimensionale Endform überführt und erst anschließend durch lokale Verformung einer der Schichten des dreidimensionalen Verbundes, die die Steifigkeit stiftende bzw. die das Kanalsystem bildende Struktur hergestellt. Durch diese Umkehr der Fertigungsreihenfolge werden die bei der konventionellen Umformung von Leichtbauplatten oder Wärmetauscherplatten zu dreidimensionalen Bauteilen auftretenden Probleme (Deformation und Beschädigung der Versteifungs- bzw. Kanalstruktur aufgrund der nachträglichen 3D-Umformung) vermieden.

Das erfindungsgemäße Verfahren ermöglicht es, mehrschichtige Bauteile (insbesondere Bauteile für Leichtbauanwendungen oder für Formen zur homogenen Temperierung) in jeder beliebigen dreidimensionalen Geometrie schnell und kostengünstig herzustellen. Im Gegensatz hierzu ist die dreidimensionale Umformbarkeit bekannter Leichtbau- oder Wärmetauscherplatten zu dreidimensionalen Bauteilen aufgrund der bereits in diesen Ausgangsplatten vorgesehenen Versteifungs- bzw. Kanalstrukturen stark eingeschränkt. Indem die steifigkeitssteigernde bzw. ein Kanalsystem bildende Struktur erst nachträglich (d. h. nach abgeschlossener 3D-Umformung) eingebracht wird, kann diese Struktur exakt der dreidimensionalen Endform des Bauteils angepasst werden, um ihre Versteifungs- bzw. Temperierungsfunktion optimal entfalten zu können.

Zwar können mehrschichtige dreidimensionale Bauteile auch dadurch hergestellt werden, dass zunächst die einzelnen Schichten durch eine separate Umformung in ihre dreidimensionale Endform überführt und danach zum fertigen Sandwichbauteil gefügt werden. Dieser Prozess ist aber gegenüber dem erfindungsgemäßen Verfahren wesentlich aufwendiger, weil er mehrere Prozessschritte erfordert und beim Fügen der dreidimensionalen Einzelteile unweigerlich Toleranzprobleme auftreten.

Nach einer besonders vorteilhaften Weiterbildung der Erfindung werden im Verfahrensschritt b) (d. h. beim Verbinden der flächigen Ausgangselemente) im Querschnitt geschlossene Hohlräume zwischen den Schichten gebildet, welche dann im Verfahrensschritt d) (also erst nach der dreidimensionalen Umformung des Verbundes) durch ein wirkmedien- oder wirkenergiebasiertes Umformverfahren in ihren Querschnitten verändert werden, insbesondere indem im Zuge einer Innenhochdruckumformung ein unter Druck stehendes Wirkmedium in die Hohlräume eingefüllt wird, sodass sich die Hohlräume dabei unter Ausbildung der steifigkeitssteigernden und / oder ein Kanalsystem bildendenden Struktur aufweiten.

Die Ausbildung der steifigkeitssteigernden bzw. ein Kanalsystem bildenden Struktur im abschließenden Verfahrensschritt d) kann somit in wirtschaftlicher Weise ohne den Einsatz von zusätzlichen formspeichernden Werkzeugen allein durch die den Hohlraumquerschnitt aufweitende Kraft des Wirkmediums oder der Wirkenergie erreicht werden. Außerdem kann gegenüber bekannten Versteifungs- bzw. Kanalstrukturen in Leichtbau- bzw. Wärmetauscherplatten, die zumeist aufgrund des Einsatzes formspeichernder Werkzeuge (z. B. Prägewalzen) aus Einheitselementen mit gleichbleibender Größe und Form und gleichmäßigem Rasterabstand gebildet sind, durch eine Variation der im erfindungsgemäßen Verfahrensschritt b) gebildeten Hohlräume und / oder durch eine Variation der im Verfahrensschritt d) auf die Hohlräume einwirkenden Kraft des Wirkmediums bzw. der Wirkenergie eine Struktur mit lokal (z. B. hinsichtlich Größe, Form und / oder Rasterabstand) veränderlichen Strukturelementen erzeugt werden.

Die im Verfahrensschritt a) bereitgestellten und im Verfahrensschritt b) miteinander verbundenen flächigen Ausgangselemente (z. B. Bleche oder Platinen bzw. deren Zuschnitte) können gleich oder unterschiedlich groß sein, wobei nach einem bevorzugten Ausführungsbeispiel eine Vielzahl kleinerer Elemente auf der Oberfläche eines größeren Elements angebracht werden, sodass insbesondere ein freier Abstand zwischen zwei benachbarten kleineren Elementen verbleibt.

Durch eine derartige Dimensionierung und Positionierung der Ausgangselemente lässt sich im Verfahrensschritt d) eine Struktur zur Steifigkeitssteigerung bzw. zur Führung eines Temperierungsmediums bilden, die exakt an den geforderten Anwendungsfall angepasst ist. So werden im abschließenden Verfahrensschritt d) zusätzliche Strukturelemente nur in den Bereichen des dreidimensionalen Bauteils ausgebildet, wo ihre steifigkeitssteigernde bzw. temperierende Funktion tatsächlich benötigt wird, wodurch eine unnötige und unwirtschaftliche Überdimensionierung des Bauteils verhindert wird.

Die im Verfahrensschritt c) stattfindende Umformung des flächigen Verbundes in die gewünschte dreidimensionale Bauteilform kann durch verschiedenste Umformverfahren, z. B. durch den Einsatz formspeichernder Umformwerkzeuge (wie beispielsweise durch Tiefziehen) oder durch ein wirkmedien- oder wirkenergiebasiertes Umformverfahren (beispielsweise durch Innenhochdruckumformung) realisiert werden. Die dreidimensionale Umformung kann zudem inkrementell (beispielsweise durch inkrementelle Blechumformung), frei (beispielsweise durch Bulgen) oder flexibel (beispielsweise durch Abkanten) erfolgen.

In vorteilhafter Weise kommt die Ausbildung der steifigkeitssteigernden bzw. ein Kanalsystem bildenden Struktur im Verfahrensschritt d) ohne den Einsatz formspeichernder Werkzeuge allein durch den "Plopp-Effekt" zustande, indem der Werkstoff der jeweiligen Schicht bei einem bestimmten statischen Druck oder einer bestimmten sonstigen Last selbständig einen neuen stabilen Zustand einnimmt.

Durch Ausnutzung des "Plopp-Effekts" stellt sich auf besonders materialschonende, weil werkzeuglose Weise und mit extrem geringem Energieaufwand eine die Steifigkeit des Bauteils erhöhende Beul- oder Wölbstruktur mit einer versteifenden Idealform ein. Gleichzeitig werden durch den auf den Phänomenen der makroskopischen, physikalischen Selbstorganisation beruhenden "Plopp-Effekt" die zuvor (beim Verbinden der Einzelelemente und beim dreidimensionalen Umformen des Verbundes) in das Bauteil eingebrachten Spannungen minimiert, wobei die ursprüngliche (u. U. veredelte) Oberflächengüte der Ausgangsmaterialien aufgrund des Fehlens jeglichen flächigen Werkzeugeingriffs vollständig erhalten bleibt. Dieser "Plopp-Effekt" wird zwar bei einigen Produkten bereits heute beworben, ist aber bedingt durch die Fertigungsweise oft gar nicht zum Tragen gekommen.

Im Folgenden werden unter Bezugnahme auf die Zeichnungen Ausführungsbeispiele der Erfindung benannt und näher erläutert. Es zeigen:
- Fig. 1a und 1b: einen ersten Verfahrensschritt a) des erfindungsgemäßen Verfahrens;
- Fig. 2a und 2b: einen an den ersten Verfahrensschritt a) gemäß Fig. 1a und 1b anschließenden zweiten Verfahrensschritt b);
- Fig. 3a und 3b: eine an den zweiten Verfahrensschritt b) gemäß Fig. 2a und 2b anschließenden dritten Verfahrensschritt c); und
- Fig. 4a und 4b: einen an den dritten Verfahrensschritt c) gemäß Fig. 3a und 3b anschließenden vierten Verfahrensschritt d).

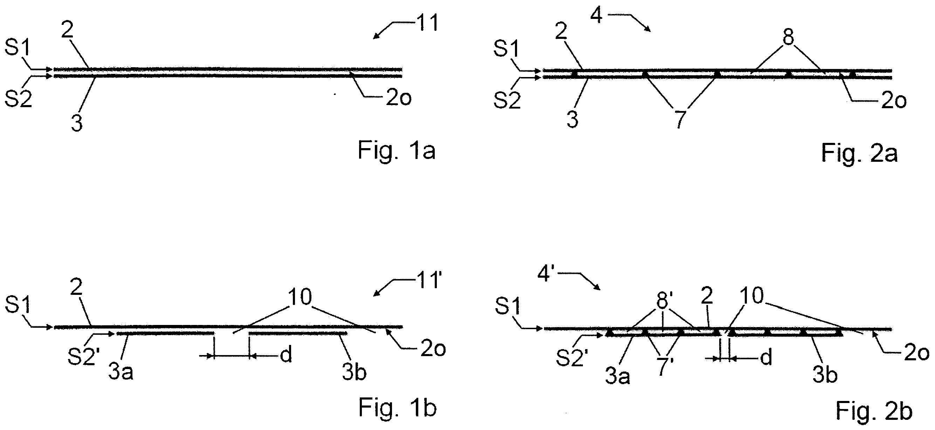

Die Fig. 1a, 2a, 3a und 4a zeigen in schematischer Darstellung die Verfahrensschritte zur Herstellung eines mehrschichtigen dreidimensionalen Bauteils 1 gemäß einem ersten Ausführungsbeispiel der Erfindung, während die Fig. 1b, 2b, 3b und 4b in schematischer Darstellung die Verfahrensschritte zur Herstellung eines mehrschichtigen dreidimensionalen Bauteils 1' gemäß einem zweiten Ausführungsbeispiel der Erfindung zeigen.

Beiden Ausführungsbeispielen gemein ist der folgende Grundablauf zur Herstellung eines mehrschichtigen dreidimensionalen Bauteils 1, 1':

In einem ersten Verfahrensschrift a) gemäß Fig. 1a und 1b werden zunächst mindestens zwei flächige Elemente 2, 3, 3a, 3b (vorzugsweise Bleche oder Platinen bzw. deren Zuschnitte) bereitgestellt.

In einem daran anschließenden zweiten Verfahrensschritt b) gemäß Fig. 2a und 2b werden diese flächigen Elemente 2, 3, 3a, 3b lokal miteinander verbunden, sodass mehrere abgeschlossene Hohlräume 8, 8' entstehen.

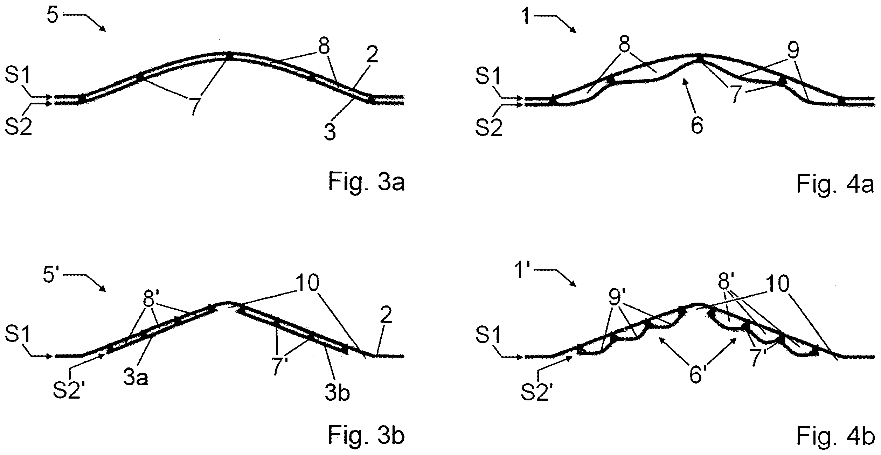

In einem daran anschließenden dritten Verfahrensschritt c) gemäß Fig. 3a und 3b erfolgt die Umformung des in Verfahrensschritt b) entstandenen mehrschichtigen Verbundes 4, 4' in die gewünschte dreidimensionale Form durch verschiedenste formgebende Verfahren.

In einem abschließenden vierten Verfahrensschrift d) gemäß Fig. 4a und 4b wird in dem in Verfahrensschritt c) erzeugten mehrschichtigen dreidimensional geformten Verbund 5, 5' eine die Steifigkeit steigernde bzw. ein Kanalsystem bildende Struktur 6, 6' gebildet. Die Realisierung einer derartigen Struktur 6, 6' erfolgt vorzugsweise auf Basis einer wirkmedien- bzw. wirkenergiebasierten Umformung, ohne dass der Einsatz zusätzlicher formspeichernder Werkzeuge für diesen abschließenden Verfahrensschritt d) notwendig ist.

Wichtig für das erfindungsgemäße Verfahren ist die Einhaltung der Reihenfolge der vorab in Kürze zusammengefassten Verfahrensschritte a) bis d). Hierbei gilt es insbesondere zu beachten, dass der Verfahrensschritt c) (Umformung des flächigen Schichtverbundes 4, 4' in einen dreidimensional geformten Schichtverbund 5, 5', vgl. den Übergang von Fig. 2a, 2b nach Fig. 3a, 3b) zeitlich vor dem Verfahrensschritt d) (Herstellung der steifigkeitssteigernden bzw. ein Kanalsystem bildenden Struktur 6, 6', vgl. den Übergang von Fig. 3a, 3b nach Fig. 4a, 4b) ausgeführt wird. Diese Fertigungsreihenfolge kehrt die im Stand der Technik anzutreffende Vorgehensweise um, da nicht länger Leichtbauplatten oder Wärmetauscherplatten ("Pillow Plates) mit bereits integrierter steifigkeitssteigernder bzw. ein Kanalsystem bildender Struktur einer nachträglichen dreidimensionalen Umformung unterzogen werden müssen. Durch die erfindungsgemäß vorgeschlagene Umkehr der Fertigungsreihenfolgen (zunächst die dreidimensionale Umformung, erst danach die Bildung der Struktur 6, 6') wird vorteilhafterweise ausgeschlossen, dass die Struktur 6, 6' aufgrund der dreidimensionalen Umformung deformiert wird und somit ihre steifigkeitssteigernde bzw. kanalisierende Funktion einbüßt.

Zudem gilt es zu beachten, dass der Verfahrensschritt b) (Fügen der einzelnen flächigen Ausgangselemente 2, 3, 3a, 3b zu einem mehrschichtigen flächigen Verbund 4, 4', vgl. den Übergang von Fig. 1a, 1b nach Fig. 2a, 2b) zeitlich vor dem Verfahrensschritt c) (Umformung des mehrschichtigen flächigen Verbundes 4, 4' in einen mehrschichtigen dreidimensional geformten Verbund 5, 5', vgl. den Übergang von Fig. 2a, 2b nach Fig. 3a, 3b) liegt. Durch diese Fertigungsreihenfolge werden Toleranzprobleme vermieden, die im Stand der Technik dadurch entstehen, dass zunächst die einzelnen Elemente separat voneinander dreidimensional umgeformt und erst anschließend in einem aufwendigen Fügeprozess zum mehrschichtigen dreidimensionalen Verbund zusammengesetzt werden.

Ein weiterer besonders vorteilhafter Aspekt der Erfindung sieht vor, dass im Verfahrensschritt d) bei der Ausbildung der steifigkeitssteigernden bzw. ein Kanalsystem (z. B. für den Durchfluss eines Wärmeträgermediums) bildenden Struktur 6, 6' gemäß dem Übergang von Fig. 3a, 3b nach Fig. 4a, 4b der sogenannte "Plopp-Effekt" ausgenutzt wird. In Fig. 4a, 4b verformt sich der Werkstoff der unteren Schicht S2, S2' ab einem bestimmten statischen Druck, der beispielsweise im Zuge einer Innenhochdruckumformung durch ein in die Hohlräume 8, 8' eingefülltes, unter Druck stehendes Wirkmedium erzeugt werden kann, oder ab einer bestimmten sonstigen Last (ohne jeglichen Werkzeugeingriff und mit geringstem zusätzlichen Energieeintrag) quasi von selbst in die dritte Dimension. Dabei nimmt der Werkstoff der unteren Schicht S2, S2' nach dem "Ploppen" einen stabilen Zustand in Form einer Beul- bzw. Wölbstruktur mit regelmäßig geformten (z. B. sechseckigen, wabenförmigen oder 3D-facettenförmigen) Strukturelementen 9, 9' ein, wie sie in der Natur (z. B. nach dem Beispiel der Bienenwabe) bekannt sind. Ein derartiger Umformvorgang, der ab einer bestimmten Rahmenbedingung nahezu wie von selbst abläuft, wird mit Phänomenen der makroskopischen, physikalischen Selbstorganisation begründet. Durch die Idealform der unter Ausnutzung des "Plopp-Effekts" gebildeten Strukturelemente 9, 9' werden selbst sehr dünnen Materialien (wie Blechen) eine hohe mechanische Steifigkeit und weitere positive Eigenschaften verliehen. So werden durch das "Ploppen" die zuvor (beim Fügen und beim dreidimensionalen Umformen) im Werkstoff der unteren Schicht S2, S2' induzierten Spannungen minimiert. Gleichzeitig ist dieser Umformprozess unter Nutzung des "Plopp-Effekts" extrem material- und oberflächenschonend, da die Größen der Flächen des Ausgangsmaterials und des strukturierten Materials annähernd unverändert bleiben, was vorteilhafterweise zur Folge hat, dass sogar die Oberflächengüte eines vorveredelten Materials (wie eines lackierten oder anodisierten Bleches) nach dem "Ploppen" vollständig erhalten bleibt. Mit der Nutzung des "Plopp-Effekts" können somit mehrschichtige dreidimensional geformte Bauteile 1, 1' für Leichtbau- oder Temperierungsanwendungen hergestellt werden, die eine optimale Oberflächengüte im Hinblick auf verschiedene Arbeitsanforderungen und höchste Steifigkeitswerte erreichen.

Weitere Details der Erfindung, insbesondere auch die Unterschiede zwischen den beiden Ausführungsbeispielen des erfindungsgemäßen Verfahrens, werden im Folgenden anhand der einzelnen Figuren beschrieben:
In Fig. 1a werden gemäß einem ersten Ausführungsbeispiel des Verfahrensschrittes a) zwei flächige Elemente 2, 3 bereitgestellt, die vollkommen eben geformt und von gleicher Größe sind, wobei ihre Größe hierbei jeweils annähernd der Größe des fertigen Bauteils 1 entspricht. Die beiden flächigen Elemente 2, 3 werden übereinandergelegt, sodass ein Schichtstapel 11, 11' aus zwei aufeinander angeordneten Schichten S1, S2 gebildet wird.

Davon abweichend werden gemäß dem in Fig. 1b dargestellten zweiten Ausführungsbeispiel des Verfahrensschrittes a) drei Elemente 2, 3a, 3b bereitgestellt, nämlich ein erstes Element 2, das, wie die Elemente 2, 3 aus Fig. 1a, annähernd die Größe des fertigen Bauteils 1' aufweist, und zwei zweite Elemente 3a, 3b, die eine untereinander gleiche aber gegenüber dem ersten Element 2 deutlich geringere Größe (weniger als die Hälfte der Größe des ersten Elements 2) aufweisen. Die drei Elemente 2, 3a, 3b werden ebenfalls zu einem zweischichtigen Schichtstapel 11' übereinandergeschichtet, und zwar indem die beiden zweiten (kleineren) Elemente 3a, 3b jeweils auf der unterseitigen Oberfläche 2o des ersten (größeren) Elements 2 angeordnet werden. Die Anordnung erfolgt dabei derart, dass zwischen den beiden zweiten (kleineren) Elementen 3a, 3b ein freier Abstand d verbleibt, entlang dem die Oberfläche 2o des darüber liegenden ersten (größeren) Elements 2 freiliegt. Zudem schließen die beiden zweiten (kleineren) Elemente 3a, 3b nicht bündig mit den Außenseiten des darüber liegenden (größeren) Elements 2 ab, sodass auch hier die Oberfläche 2o des ersten (größeren) Elements 2 unbedeckt freiliegt.

Das zweite Ausführungsbeispiel bietet die vorteilhafte Möglichkeit, die kleineren Elemente 3a, 3b lokal nur dort auf das größere Element 2 anzubringen, wo im späteren Bauteil 1' auch tatsächlich eine zusätzliche versteifende bzw. temperierende Funktion benötigt wird, sodass eine unnötige und unwirtschaftliche Überdimensionierung des Bauteils 1' vermieden wird. Zudem gestattet ein lokales Anbringen kleinerer Elemente 3a, 3b eine verbesserte dreidimensionale Umformbarkeit des Verbundes 4, 4' im Verfahrensschritt c), da die freiliegenden einschichtigen Bereiche 10 des Verbundes 4, 4' nur einen geringen Umformwiderstand aufweisen und sich daher gut in jede gewünschte dreidimensionale Form bringen lassen.

Es versteht sich, dass über die beiden in Fig. 1a und 1b gezeigten Ausführungsbeispiele hinaus eine Vielzahl weiterer Möglichkeit besteht, die flächigen Ausgangselemente 2, 3, 3a, 3b hinsichtlich ihrer Größe, Form, Anzahl und / oder gegenseitigen Anordnung derart zu wählen, dass am Ende der vier erfindungsgemäßen Verfahrensschritte a) bis d) ein optimales Herstellungsergebnis erzielt wird.

Anschließend werden die gemäß Fig. 1a und 1b aufeinandergeschichteten Elemente 2, 3, 3a, 3b zu einem flächigen Verbund 4, 4' gefügt. Während in Fig. 2a aufgrund der beiden gleich großen Elemente 2, 3 ein durchgängig zweischichtiger Verbund 4 entsteht, ist der zweischichtige Verbund 4' in Fig. 2b lokal unterbrochen durch einen mittleren und zwei äußere Bereiche 10, die jeweils lediglich einschichtig (bestehend aus dem oberen (größeren) Element 2) aufgebaut sind.

Die aufeinandergeschichteten Elemente 2, 3, 3a, 3b werden nur lokal an diskreten Verbindungsstellen 7, 7' miteinander gefügt, wobei zu diesem Zweck unterschiedliche stoffschlüssige Fügeverfahren (wie z. B. Schweißen, Löten oder Kleben) oder Fügeverfahren durch Umformen (wie z. B. Durchsetzfügen) oder Fügeverfahren unter Zuhilfenahme weiterer Verbindungselemente (wie z. B. Nieten oder Schrauben oder dgl.) zum Einsatz kommen können. Durch das lokale Fügen entstehen zwischen beiden Schichten S1, S2, S1', S2' des Verbundes 4, 4' mehrere Hohlräume 8, 8', die jeweils in Umfangsrichtung abgeschlossene, flach rechteckförmige Querschnitte aufweisen. Im Fügeprozess nach Fig. 2a und 2b kann mittels einer Veränderung der Position und / oder des Abstandes der diskreten Verbindungsstellen 7, 7' leicht eine entsprechende Anpassung der gebildeten Hohlräume 8, 8' (hinsichtlich Position und / oder Dimension) vorgenommen werden. Da aus diesen Hohlräumen 8, 8' im abschließenden Verfahrensschritt d) (vgl. den Übergang von Fig. 3a, 3b nach Fig. 4a, 4b) wiederum die steifigkeitssteigernde bzw. ein Kanalsystem bildende Struktur 6, 6' geformt wird, besteht bereits im Fügeprozess die Möglichkeit auf die Position und / oder Dimension dieser Struktur 6, 6' Einfluss zu nehmen.

Als nächster Verfahrensschrift c) wird der ebene mehrschichtige Verbund 4, 4' aus Fig. 2a und 2b durch verschiedenste Umformverfahren in einen mehrschichtigen dreidimensional geformten Verbund 5, 5' überführt. Dieser Verbund 5, 5' entspricht in seiner grundlegenden dreidimensionalen Gestalt bereits dem fertigen Bauteil 1, 1', wobei jedoch die zusätzlich erforderlichen steifigkeitssteigernden bzw. ein Kanalsystem bildenden Strukturelemente 9, 9' noch nicht vollständig ausgeformt worden sind.

Der in Fig. 3a und 3b gezeigte dreidimensional geformte Verbund 5, 5' kann durch werkzeuggebundene Verfahren, wie z. B. dem Tiefziehen mittels eines Tiefziehwerkzeuges und / oder der Innenhochdruckumformung, sowie durch werkzeuglose Verfahren, wie z. B. dem Bulgen, erhalten werden. Alternativ kann der ebene Schichtverbund 4, 4' aus Fig. 2a und 2b schrittweise durch inkrementelle Blechumformung (IBU) in die gewünschte dreidimensionale Form nach Fig. 3a und 3b gebracht werden. Der im mittleren einschichtigen Bereich 10 des dreidimensional geformten Verbundes 5, 5' nach Fig. 3b eingetragene enge Umformradius kann insbesondere durch ein biegendes Umformverfahren (wie z. B. durch Abkanten, Schwenkbiegen oder dgl.) realisiert werden.

Abschließend erfolgt die durch den Übergang von Fig. 3a, 3b nach Fig. 4a, 4b dargestellte Herstellung der steifigkeitssteigernden bzw. ein Kanalsystem bildenden Struktur 6, 6'. Diese Struktur 6, 6' kann zeitgleich in einem einzigen Prozessschritt oder - im Falle mehrerer voneinander getrennter Hohlräume 8, 8' - auch zeitlich nacheinander in mehreren Prozessschritten ausgebildet werden. Vorteilhafterweise wird hierfür im Zuge einer Innenhochdruckumformung ein unter Druck stehendes Wirkmedium in die zwischen die Schichten S1, S2, S1', S2' des Verbundes 5, 5' nach Fig. 3a und 3b gebildeten Hohlräume 8, 8' eingefüllt, sodass sich die Hohlräume 8, 8' unter Einwirkung des in ihrem Inneren aufgebauten statischen Druckes aufweiten. Wie aus Fig. 4a und 4b ersichtlich, wird diese wirkmedienbasierte Aufweitung der Hohlräume 8, 8' jeweils durch eine nach unten gerichtete Auswölbung bzw. Ausbeulung der unteren Schicht S2, S2' des Verbundes 5, 5' realisiert, wobei diese Auswölbung bzw. Ausbeulung - wie bereits vorab geschildert - unter Ausnutzung des "Plopp-Effekts" erfolgt, sodass im fertigen Bauteil 1, 1' Strukturelemente 9, 9' mit einer oberflächenschonenden, hochversteifenden Idealform erhalten werden.

Essenziell für die Ausbildung der steifigkeitssteigernden bzw. ein Kanalsystem bildenden Struktur 6, 6' ist, dass mindestens eine der Schichten S1, S2, S1', S2' des bereits die finale dreidimensionale Form einnehmenden Verbundes 5, 5' nachträglich noch einer lokalen Verformung unterzogen wird. Durch diese Fertigungsreihenfolge (zunächst dreidimensionale Umformung des Verbundes 4, 4' und erst danach lokale Verformung mindestens einer der Schichten S1, S1', S2, S2' zwecks Ausbildung der steifigkeitssteigernden bzw. ein Kanalsystem bildenden Struktur 6, 6') wird sichergestellt, dass die besagte Struktur 6, 6' exakt an die dreidimensionale Bauteilform angepasst ist, um ihre steifigkeitssteigernde bzw. kanalisierende Funktion zuverlässig erfüllen zu können.

Die zur Herstellung der steifigkeitssteigernden bzw. ein Kanalsystem bildenden Struktur 6, 6' erforderliche lokale Verformung mindestens einer der Schichten S1, S2, S1', S2' des dreidimensionalen Verbundes 5, 5' kann - wie vorgeschildert - wirkmedienbasiert (z. B. durch Innenhochdruckumformung) oder aber alternativ auch durch wirkenergiebasierte Verfahren, durch Nutzung chemischer Reaktionen oder durch lokale Erwärmung erreicht werden. Die vorgenannten Verfahren besitzen alle den Vorteil, dass keine zusätzlichen formspeichernden Werkzeugelemente notwendig sind.

Die finale dreidimensionale Form des Bauteils 1, 1' kann auch durch eine abwickelbare Form hergestellt werden, die durch Abkanten und lokales Fügen zur gewünschten finalen dreidimensionalen Form gebracht wird. Entscheidend ist, dass die steifigkeitssteigernde bzw. ein Kanalsystem bildende Struktur 6, 6' erst nach Abschluss der dreidimensionalen Formgebung durch lokales Verformen mindestens einer der Schichten S1, S1', S2, S2' des dreidimensionalen Verbundes 5, 5' ausgebildet wird.

Die steifigkeitssteigernde bzw. ein Kanalsystem bildende Struktur 6, 6' kann unregelmäßig sein, um entlang des Bauteils 1, 1' eine lokale Anpassung der durch diese Struktur 6, 6' bewirkten Funktion zu ermöglichen. Beispielsweise können - wie im Ausführungsbeispiel des Bauteils 1 gemäß Fig. 4a gezeigt - die einzelnen Strukturelemente 9 der Struktur 6 unterschiedlich geformt sein. Ebenfalls denkbar ist die einzelnen Strukturelemente 9' in unterschiedlichen Grundmustern entlang des Bauteils 1' zu verteilen. So können auch - wie es im Ausführungsbeispiel des Bauteils 1' gemäß Fig. 4b der Fall ist - Baueilbereiche 10 vorgesehen sein, die gänzlich frei von Strukturelementen 9' sind, weil hier keine steifigkeitssteigernde oder temperierende Funktion seitens der Struktur 6' benötigt wird.

Im Falle einer als Kanalsystem zum Durchfluss eines Wärmeträgermediums dienenden Struktur 6, 6' können unterschiedliche Strukturgeometrien gebildet werden, um eine optimale Flächen-Temperierung gewährleisten zu können. Beispielsweise kann eine solche Struktur 6, 6' einkanalig ohne Verzweigungen, z. B. in Form eines mäanderförmig geführten Kanals ausgeführt sein. Alternativ kann die Struktur 6, 6' mehrkanalig mit Verzweigungen ähnlich denen von Plattenheizkörpern, z. B. in Form einer Harfen- oder Mäanderstruktur ausgeführt sein. In weiterer Alternative ist es möglich, die Struktur 6, 6' so zu gestalten, dass ein einkanaliger Zu- und Ablauf und nach bionischem Muster aufgefächerte Strömungskanäle zwischen Zu- und Ablauf vorgesehen sind.

Der Anwendungsbereich der nach dem vorbeschriebenen Verfahren hergestellten Bauteile 1, 1' umfasst alle Sektoren, in denen Materialeffektivität, Leichtbau und das akustische Verhalten eine zentrale Anforderung an die Produktentwicklung und Konstruktion darstellen. Auch umfasst das Einsatzgebiet der erfindungsgemäß hergestellten Bauteile Formen zur homogenen Temperierung, wie beispielsweise dreidimensional geformte Wärmetauscher. Hier können erfindungsgemäß hergestellte Bauteile insbesondere Verwendung finden als massearme und preiswerte Formen zur Herstellung von Faserverbundbauteilen (Konsolidierung der Matrix), zum Thermoformen und für ähnliche, eine homogene Temperierung erfordernde Prozesse.

## Patentansprüche

1. Verfahren zur Herstellung eines mehrschichtigen dreidimensional geformten Bauteils (1, 1'), **gekennzeichnet durch** die folgenden, zeitlich aufeinanderfolgenden Schritte:
a) Bereitstellen von mindestens zwei flächigen Elementen (2, 3, 3a, 3b);
b) Verbinden der Elemente (2, 3, 3a, 3b) zur Bildung eines aus mehreren Schichten (S1, S2, S1', S2') zusammengesetzten Verbundes (4, 4');
c) Umformen des Verbundes (4, 4') in eine gewünschte dreidimensionale Form;
d) Lokales Verformen mindestens einer der Schichten (S2, S2') unter Ausbildung einer steifigkeitssteigernden und / oder ein Kanalsystem bildenden Struktur (6, 6').

2. Verfahren nach Anspruch 1, **dadurch gekennzeichnet, dass** in Schritt a) vollkommen ebene oder flach gekrümmte Elemente (2, 3, 3a, 3b), insbesondere Bleche oder Platinen bzw. deren Zuschnitte bereitgestellt werden, wobei in Schritt a) vorzugsweise zumindest ein erstes Element (2), das annähernd die Größe des fertigen Bauteils (1, 1') aufweist, und zumindest ein zweites Element (3, 3a, 3b), das eine gleiche oder kleinere Größe aufweist als das erste Element (2), bereitgestellt werden und wobei in Schritt b) vorzugsweise die Elemente (2, 3, 3a, 3b) sich zumindest bereichsweise überlappend miteinander verbunden werden.

3. Verfahren nach Anspruch 1 oder 2, **dadurch gekennzeichnet, dass** in Schritt b) eine Vielzahl kleinerer Elemente (3a, 3b) auf der Oberfläche (2o) eines größeren Elements (2) angebracht werden, wobei insbesondere ein freier Abstand (d) zwischen zwei benachbarten kleineren Elementen (3a, 3b) verbleibt, sodass in Schritt b) insbesondere ein aus mehreren übereinander angeordneten Schichten (S1, S2, S1', S2') bestehender flächiger Verbund (4, 4') erhalten wird.

4. Verfahren nach zumindest einem der vorhergehenden Ansprüche 1 bis 3, **dadurch gekennzeichnet, dass** in Schritt b) die Elemente (2, 3, 3a, 3b) nur an diskreten Verbindungsstellen (7, 7') lokal miteinander verbunden sind, wobei in Schritt b) insbesondere mindestens ein im Querschnitt geschlossener Hohlraum (8, 8') zwischen den Schichten (S1, S2, S1', S2') gebildet wird.

5. Verfahren nach Anspruch 4, **dadurch gekennzeichnet, dass** die in Schritt b) zwischen den Schichten (S1, S2, S1', S2') gebildeten Hohlräume (8, 8') in Schritt d) durch ein wirkmedien- oder wirkenergiebasiertes Umformverfahren in ihren Querschnitten verändert werden, insbesondere indem im Zuge einer Innenhochdruckumformung ein unter Druck stehendes Wirkmedium in die Hohlräume (8, 8') eingefüllt wird, sodass sich die Hohlräume (8, 8') dabei unter Ausbildung der steifigkeitssteigernden und / oder ein Kanalsystem bildenden Struktur (6, 6') aufweiten.

6. Verfahren nach zumindest einem der vorhergehenden Ansprüche 1 bis 5, **dadurch gekennzeichnet, dass** Schritt b) durch ein Fügeverfahren, z. B. durch Schweißen, Löten, Kleben, Durchsetzfügen und / oder Nieten, ausgeführt wird.

7. Verfahren nach zumindest einem der vorhergehenden Ansprüche 1 bis 6, **dadurch gekennzeichnet, dass** Schritt c) durch den Einsatz formspeichernder Umformwerkzeuge, z. B. durch Tiefziehen mittels eines Tiefziehwerkzeuges, und / oder durch ein wirkmedien- oder wirkenergiebasiertes Umformverfahren, z. B. durch Innenhochdruckumformung, und / oder durch ein inkrementelles Umformverfahren, z. B. durch inkrementelle Blechumformung, und / oder durch ein freies Umformverfahren, z. B. durch Bulgen, und / oder durch ein flexibles Umformverfahren, z. B. durch Abkanten, ausgeführt wird.

8. Verfahren nach zumindest einem der vorhergehenden Ansprüche 1 bis 7, **dadurch gekennzeichnet, dass** die Ausbildung der Struktur (6, 6') in Schritt d) ohne den Einsatz formspeichernder Werkzeuge durch den "Plopp-Effekt" zustande kommt, indem der Werkstoff der jeweiligen Schicht (S2, S2') bei einem bestimmten statischen Druck oder einer bestimmten sonstigen Last selbstständig einen neuen stabilen Zustand einnimmt.

9. Verfahren nach zumindest einem der vorhergehenden Ansprüche 1 bis 8, **dadurch gekennzeichnet, dass** Schritt d) durch ein wirkmedienbasiertes Umformverfahren, z. B. durch Innenhochdruckumformung, und / oder durch ein wirkenergiebasiertes Umformverfahren, z. B. durch Elektromagnetumformung, und / oder durch Einwirkung von Temperatur, z. B. durch eine das Ausbeulen der Schicht (S2, S2') oder Schichten bewirkende lokale Wärmezufuhr, und / oder unter Ausnutzung einer chemischen Reaktion erfolgt.

10. Verfahren nach zumindest einem der vorhergehenden Ansprüche 1 bis 9 **dadurch gekennzeichnet, dass** die einzelnen Schichten (S1, S2, S1', S2') des Bauteils (1, 1') aus zueinander unterschiedlichen Werkstoffen gebildet sind und / oder zueinander unterschiedliche Dicken aufweisen und / oder Werkstoffe mit zueinander unterschiedlichen Wärmebehandlungszuständen aufweisen.

11. Verfahren nach zumindest einem der vorhergehenden Ansprüche 1 bis 10, **dadurch gekennzeichnet, dass** innerhalb einer einzelnen Schicht (S1, S2, S1', S2') unterschiedliche Werkstoffe verwendet werden und / oder unterschiedliche Dicken bestehen und / oder Werkstoffe mit unterschiedlichen Wärmebehandlungszuständen enthalten sind.

12. Verfahren nach zumindest einem der vorhergehenden Ansprüche 1 bis 11, **dadurch gekennzeichnet, dass** die steifigkeitssteigernde Struktur (6, 6') unterschiedlich geformte Strukturelemente (9, 9') und / oder in unterschiedlichen Grundmustern angeordnete Strukturelemente (9, 9') umfasst und / oder die steifigkeitssteigernde Struktur (6, 6') unregelmäßig entlang des Bauteils (1, 1') angeordnet ist, z. B. indem strukturfreie Bauteilbereiche (10) vorgesehen sind.

13. Verfahren nach zumindest einem der vorhergehenden Ansprüche 1 bis 12, **dadurch gekennzeichnet, dass** die ein Kanalsystem bildende Struktur (6, 6') einkanalig ohne Verzweigungen, z. B. in Form eines mäanderförmig geführten Kanals, oder mehrkanalig mit Verzweigungen, z. B. in Form einer Harfenstruktur oder Mäanderstruktur, ausgeführt ist, wobei die ein Kanalsystem bildende Struktur (6, 6') insbesondere einen einkanaligen Zu- und Ablauf und nach bionischem Muster aufgefächerte Strömungskanäle zwischen Zu- und Ablauf umfasst.

## Claims

1. Method for making a multi-layer three-dimensionally formed part (1,1'), **characterized by** the following consecutive steps:
a) providing at least two planar elements (2, 3, 3a, 3b);
b) connecting the elements (2, 3, 3a, 3b) for forming a composite (4, 4') composed of a plurality of layers (S1, S2, S1', S2');
c) forming the composite (4,4') into a desired three-dimensional shape;
d) locally deforming at least one of the layers (S2, S2') to form a stiffness-enhancing and/or channel-system forming structure (6, 6').

2. Method according to claim 1, **characterized in that** in step a) completely flat or flat-curved elements (2, 3, 3a, 3b), in particular sheets or circuit boards, or the blanks thereof, are provided, wherein in step a) preferably at least one first element (2), which has approximately the size of the finished part (1,1'), and at least one second element (3, 3a, 3b), which has an equal or smaller size than the first element (2), are provided, and wherein in step b) preferably the elements (2, 3, 3a, 3b) are connected to one another overlapping at least in areas with one another.

3. Method according to claim 1 or 2, **characterized in that** in step b) a plurality of smaller elements (3a, 3b) are mounted on the surface (2o) of a larger element (2), wherein there remains particularly a free distance (d) between two neighboring smaller elements (3a, 3b), so that in step b) particularly a planar composite (4, 4') consisting of a plurality of superposed layers (S1, S2, S1', S2') is obtained.

4. Method according to at least one of the preceding claims 1 to 3, **characterized in that** in step b) the elements (2, 3, 3a, 3b) are locally connected to one another only at discrete connection points (7, 7'), wherein in step b) particularly at least one cavity (8, 8') of a closed cross-section is formed between the layers (S1, S2, S1', S2').

5. Method according to claim 4, **characterized in that** the cavities (8, 8') formed in step b) between the layers (S1, S2, S1', S2') are changed in step d) by an active media- or active energy-based forming process in their cross-sections, particularly **in that** in the course of an internal high-pressure forming process a pressurized active medium is filled into the cavities (8, 8'), so that the cavities (8, 8') are expanding in this process to form the stiffness-enhancing and/or a channel-system forming structure (6, 6').

6. Method according to at least one of the preceding claims 1 to 5, **characterized in that** step b) is carried out by way of a joining method, e.g. by welding, soldering, adhesive bonding, clinching and/or riveting.

7. Method according to at least one of the preceding claims 1 to 6, **characterized in that** step c) is carried out by using shape memory forming tools, e.g. by deep drawing by means of a deep-drawing tool, and/or by an active media- or active energy-based forming process, for instance by internal high-pressure forming, and/or by an incremental forming process, for instance by incremental sheet forming, and/or by a free forming process, e.g. by bulging, and/or by a flexible forming process, e.g. by bending.

8. Method according to at least one of the preceding claims 1 to 7, **characterized in that** the formation of the structure (6, 6') in step d) takes place without the use of shape memory tools by way of the "plop effect" **in that** the material of the respective layer (S2, S2') independently assumes a new stable state at a specific static pressure or a specific other load.

9. Method according to at least one of the preceding claims 1 to 8, **characterized in that** step d) takes place by way of an active media-based forming process, e.g. by internal high-pressure forming, and/or by way of an active energy-based forming process, e.g. by electromagnetic forming and/or by action of temperature, for instance by a local heat supply effecting the bulging of the layer (S2, S2') or layers, and/or by utilizing a chemical reaction.

10. Method according to at least one of the preceding claims 1 to 9, **characterized in that** the individual layers (S1, S2, S1', S2') of the part (1, 1') are made from materials differing from one another and/or have thicknesses differing from one another and/or comprise materials having thermal treatment states differing from one another.

11. Method according to at least one of the preceding claims 1 to 10, **characterized in that** different materials are used within one single layer (S1, S2, S1', S2') and/or different thicknesses exist and/or materials with different thermal treatment states are contained.

12. Method according to at least one of the preceding claims 1 to 11, **characterized in that** the stiffness-enhancing structure (6, 6') comprises differently formed structural elements (9, 9') and/or structural elements (9, 9') arranged in different basic patterns and/or the stiffness-enhancing structure (6, 6') is irregularly arranged along the part (1, 1'), for instance **in that** structure-free part areas (10) are provided.

13. Method according to at least one of the preceding claims 1 to 12, **characterized in that** the structure (6, 6') forming a channel system is designed as a single channel without ramifications, for instance in the form of a meandering channel, or as multiple channels with ramifications, e.g. in the form of a harp structure or meander structure, wherein the structure (6, 6') forming a channel system comprises particularly a single-channel inlet and outlet and flow channels fanned out according to a bionic pattern between inlet and outlet.

## Revendications

1. Procédé de fabrication d'un composant (1, 1') à couches multiples et de forme tridimensionnelle, **caractérisé par** les étapes suivantes se succédant dans le temps :
a) fourniture et préparation d'au moins deux éléments de grande surface (2, 3, 3a, 3b) ;
b) liaison des éléments (2, 3, 3a, 3b) pour former un élément composite (4, 4') composé de plusieurs couches (S1, S2, S1', S2') ;
c) formage de l'élément composite (4, 4') à une forme tridimensionnelle souhaitée ;
d) déformation locale d'au moins l'une des couches (S2, S2') conduisant à former une structure (6, 6') augmentant la rigidité et/ou formant un système de canaux.

2. Procédé selon la revendication 1, **caractérisé en ce que** dans l'étape a) on fournit et prépare des éléments (2, 3, 3a, 3b) totalement plats ou à courbure relativement plate, notamment des tôles ou platines ou leurs flancs découpés, procédé d'après lequel dans l'étape a) on fournit et prépare au moins un premier élément (2), qui présente approximativement la grandeur du composant fini (1, 1'), et au moins un deuxième élément (3, 3a, 3b), qui présente une grandeur égale ou inférieure à celle du premier élément (2), et d'après lequel dans l'étape b) les éléments (2, 3, 3a, 3b) sont de préférence reliés mutuellement de manière à se chevaucher au moins partiellement.

3. Procédé selon la revendication 1 ou la revendication 2, **caractérisé en ce que** dans l'étape b) un grand nombre d'éléments (3a, 3b) plus petits sont rapportés sur la surface (20) d'un élément plus grand (2), procédé d'après lequel une distance d'espacement libre (d) est notamment conservée entre deux éléments plus petits (3a, 3b) voisins, de sorte que l'on obtient dans l'étape b), notamment un élément composite (4, 4') de grande surface constitué de plusieurs couches (S1, S2, S1', S2') agencées les unes au-dessus des autres.

4. Procédé selon l'une au moins des revendications précédentes 1 à 3, **caractérisé en ce que** dans l'étape b), les éléments (2, 3, 3a, 3b) ne sont reliés localement qu'au niveau de points de liaison discrets (7, 7'), notamment procédé d'après lequel au moins une cavité (8, 8') de section transversale fermée est formée entre les couches (S1, S2, S1', S2') à l'étape b).

5. Procédé selon la revendication 4, **caractérisé en ce que** les cavités (8, 8') formées à l'étape b) entre les couches (S1, S2, S1', S2'), sont modifiées dans leur section transversale à l'étape d), par un procédé de formage basé sur l'action d'un fluide ou sur l'action d'une énergie, notamment grâce au fait qu'au cours d'un formage par haute pression intérieure, un fluide d'action se trouvant sous pression est envoyé dans les cavités (8, 8'), de sorte que les cavités (8, 8') s'élargissent à cette occasion en formant la structure (6, 6') augmentant la rigidité et/ou formant un système de canaux.

6. Procédé selon l'une au moins des revendications précédentes 1 à 5, **caractérisé en ce que** l'étape b) est exécutée par un procédé d'assemblage, par exemple par soudage, brasage, collage, clinchage et/ou rivetage.

7. Procédé selon l'une au moins des revendications précédentes 1 à 6, **caractérisé en ce que** l'étape c) est exécutée par la mise en oeuvre d'outillages de formage à mémoire de forme, par exemple par emboutissage au moyen d'un outillage d'emboutissage, et/ou par un procédé de formage basé sur l'action d'un fluide ou sur l'action d'une énergie, par exemple par formage par haute pression intérieure, et/ou par un procédé de formage incrémental, par exemple par un formage de tôle incrémental, et/ou par un procédé de formage libre, par exemple par repassage, et/ou par un procédé de formage flexible, par exemple par pliage.

8. Procédé selon l'une au moins des revendications précédentes 1 à 7, **caractérisé en ce que** la formation de la structure (6, 6') dans l'étape d) est produite sans la mise en oeuvre d'outillages de formage à mémoire de forme, par l'effet à déclic dit "effet plopp", grâce au fait que le matériau de la couche respective (S2, S2') prend automatiquement un nouvel état stable pour une pression statique déterminée ou une autre charge déterminée.

9. Procédé selon l'une au moins des revendications précédentes 1 à 8, **caractérisé en ce que** l'étape d) est exécutée par un procédé de formage basé sur l'action d'un fluide, par exemple par formage par haute pression intérieure, et/ou par un procédé de formage basé sur l'action d'une énergie, par exemple par formage électromagnétique, et/ou par l'action de la température, par exemple par une amenée de chaleur localisée provoquant la déformation de la couche (S2, S2') ou des couches, et/ou par l'exploitation d'une réaction chimique.

10. Procédé selon l'une au moins des revendications précédentes 1 à 9, **caractérisé en ce que** les couches individuelles (S1, S2, S1', S2') du composant (1, 1') sont réalisées en des matériaux différents les uns des autres, et/ou présentent des épaisseurs différentes les unes des autres, et/ou présentent des matériaux avec des états de traitement thermique différents les uns des autres.

11. Procédé selon l'une au moins des revendications précédentes 1 à 10, **caractérisé en ce qu'**à l'intérieur d'une couche individuelle (S1, S2, S1', S2'), on utilise des matériaux différents, et/ou existent des épaisseurs différentes, et/ou sont contenues des matériaux avec des états de traitement thermique différents.

12. Procédé selon l'une au moins des revendications précédentes 1 à 11, **caractérisé en ce que** la structure (6, 6') augmentant la rigidité comprend des éléments de structure (9, 9') de formes différentes, et/ou des éléments de structure (9, 9') agencés selon des motifs de base différents, et/ou la structure (6, 6') augmentant la rigidité est agencée de manière irrégulière le long du composant (1, 1'), par exemple en prévoyant des zones de composant (10) exemptes de structure.

13. Procédé selon l'une au moins des revendications précédentes 1 à 12, **caractérisé en ce que** la structure (6, 6') formant un système de canaux est réalisée selon une configuration monocanal sans ramifications, par exemple en tant que canal en forme de méandres, ou selon une configuration à canaux multiples avec ramifications, par exemple en tant que structure de harpe ou structure en méandres, la structure (6, 6') formant un système de canaux comprenant notamment un aller et un retour monocanal et des canaux d'écoulement déployés en éventail selon un motif bionique, entre l'aller et le retour.
